# EUROPÄISCHE PATENTANMELDUNG

(11) **EP 0 551 139 A2**
(43) Veröffentlichungstag der Anmeldung: **14.07.1993**
(21) Anmeldenummer: 93100287.7
(22) Anmeldetag: 11.01.1993
(51) Int. Cl.: A01B 33/02

(54) **Vorrichtung zum Planieren von Böden**

(30) Priorität: 09.01.1992 DE 9200166 U
(71) Anmelder: Oberholzer, Josef, CH-9202 Gossau (CH); Oberholzer, Guido, CH-8558 Rapperswilen (CH)
(72) Erfinder: Oberholzer, Josef, CH-9202 Gossau (CH); Oberholzer, Guido, CH-8558 Rapperswilen (CH)
(74) Vertreter: Weiss, Peter, Dr. rer.nat.

(57) **Zusammenfassung**

Bei einer Vorrichtung zum Planieren von Böden, insbesondere zur Rasen-, Kies- oder Grundplanie, mit einem Grundgehäuse (1), welches einem Antrieb eines Antriebsfahrzeuges zugeordnet ist, soll in dem Grundgehäuse (1) eine Schneckenwelle (9) angeordnet sein, welche um ihre Längsachse (17) quer zur Fahrtrichtung dreht und auf der Arbeitselemente (18) in einer Schraubenlinie angeordnet sind.

## Beschreibung

Die vorliegende Erfindung betrifft eine Vorrichtung zum Planieren von Böden, insbesondere zur Rasen-, Ries- oder Grundplanie, mit einem Grundgehäuse, welches einem Antrieb eines Antriebsfahrzeuges zugeordnet ist.

Vorrichtungen zum Bearbeiten von Böden sind in vielfältiger Form und Ausführung bekannt. Beispielsweise gibt es Gartengeräte, welche einen Gartenboden umpflügen oder einen Rasen vertikutieren. In der Regel wird hier mit drehbaren Wellen gearbeitet, an denen sich dann entsprechende in die Rasenoberfläche oder den Boden eingreifende Arbeitselemente befinden. Für eine Bodenplanie ist dagegen lediglich eine Planieregge bekannt, welche eine entsprechende Vielzahl von senkrecht zum Boden stehenden Zähnen aufweist. Mit dieser Egge wird über den Rasen, ein landwirtschaftlich genutztes Gelände, einen Kiesboden od. dgl. gefahren und auf diese Weise versucht, Unebenheiten auszugleichen. In der Praxis bedingt dies aber ein mehrfaches Überfahren der Unebenheiten, wodurch der Arbeitsaufwand wesentlich erhöht wird.

Der vorliegenden Erfindung liegt die Aufgabe zugrunde, ein Gerät der o.g. Art zu entwickeln, mittels welchem auf einfache Art und Weise eine Planie beliebiger Art durchgeführt werden kann. Bevorzugt soll dies in einem Arbeitsgang erfolgen.

Zur Lösung dieser Aufgabe führt, daß in dem Grundgehäuse eine Schneckenwelle angeordnet ist, welche um ihre Längsachse quer zur Fahrtrichtung dreht und auf der Arbeitselemente in einer Schraubenlinie angeordnet sind.

Diese in einer Schraubenlinie angeordneten Arbeitelemente bewirken, dass überschüssiger Boden bzw. anderes Planiermaterial beim Überfahren mit dieser Planiervorrichtung zu einer Seite hin verfrachtet wird, so dass dann eine wesentlich schnellere und leichtere Verteilung dieses überschüssige Material auf Bodensenken erfolgen kann.

Bevorzugt sind die Arbeitselemente so ausgestaltet, dass mittels ihnen vor allem auch ein Auslesen von Steinen erfolgen kann. Dieses Auslesen geschieht so, dass die Arbeitselemente die Steine aus dem Boden heraus gegen die Gehäuserückwand bzw. den Gehäusedeckel schleudern. Infolge der Schrägstellung der Arbeitselemente geschieht dies allerdings in einem Winkel zur Fahrtrichtung, so dass beim mehrfachen Erfassen dieser Steine durch die Arbeitselemente die Steine zu einer Seitenwand des Grundgehäuses hin verfrachtet werde. Dort befindet sich bevorzugt eine Klappe, durch welche die Steine und überschüssiges Material aus dem Gehäuse gelangen kann und sich neben dem Gehäuse als Wall ansammelt. Diese Klappe schliesst durch ihr Eigengewicht, so dass Steine nicht frei durch eine entsprechende Klappenöffnung fliegen können, was nicht den Unfallverhüttungsvorschriften entsprechen würde.

Bei der Schneckenwelle kann es sich um eine normale bekannte Schneckenwelle handeln, welche eine durchgehende Schneckenwendel besitzt. In diesen Wendelgängen kann Bodenmaterial bereits zur Seite transportiert werden, so dass sich diese Ausführungsform bei einer bestimmten Bodenbearbeitung anbietet. Die entsprechenden Arbeitselemente sind dann auf den Wendelgang in bestimmten Abständen aufgesetzt.

In einem anderen Ausführungsbeispiel ist die Schneckenwelle querschnittlich mehreckig ausgebildet, wodurch sich Aufsatzflächen für die Arbeitselemente ausbilden. Hierdurch ergibt sich eine wesentlich günstigere Möglichkeit der Befestigung dieser Arbeitselemente an der Schneckenwelle.

Basis für das Arbeitselement ist ein Montageelement, welcher schräg zur Längsachse der Schneckenwelle angeordnet ist. Bei dem Montageelement kann es sich um einen Winkel, ein Flacheisen oder T-Eisen handeln. Hiergibt es viele Ausgestaltungen, die von der vorliegenden Erfindung umfasst sein söllen. Bei einem Winkel oder T-Eisen ist ein Schenkel dieses Montageelements auf die Aufsatzfläche aufgeschweisst, während der andere Schenkel Bohrungen für entsprechende Befestigungsmittel aufweist. An den anderen Schenkel schlägt dann auch eine Platte an, welche die kongruenten Bohrungen für die Befestigungsmittel besitzt. Diese lösbare Befestigung hat den Vorteil, dass bei einer Beschädigung der Platte oder deren Verschleiss diese leicht ausgetauscht werden kann.

Insgesamt stehen die Platten, welche als Schaufeln dienen, ebenfalls schräg zur Längsachse der Schneckenwelle, so dass durch sie eine zur Seite hin gerichtete Förderung von Planiematerial stattfindet.

In einem bevorzugten Ausführungsbeispiel der Erfindung ist an der Platte noch zusätzlich ein Aufreisszahn festgelegt, der wiederum bevorzugt noch einen abgekröpften Arm aufweist. Mit diesem Arm kann der Aufreisszahn tief in den Boden eingreifen, ohne dass die Kraftaufnahme der Schneckenwelle wesentlich erhöht wird. Trifft dieser Aufreisszahn bzw. der Arm auf eine Stein, so hebelt er diesen Stein aus dem Boden heraus und fördert ihn, wie oben beschrieben zur Seite hin. Der Aufreisszahn kann beispielsweise als Gussstück oder aus einem Vollmaterial hergestellt sein, wobei in letzgenanntem Fall der Arm abgebogen ist.

Bevorzugt ist die Schneckenwelle über einen Antrieb mit dem Antriebsfahrzeug verbunden. Die Verbindung sollte so ausgestaltet sein, dass bei einer zu hohen Kraftaufnahme der Schneckenwelle ein Schlupf möglich ist. Dies geschieht beispielsweise dadurch, dass die Schneckenwelle über ein Rad und einen Antriebsriemen mit einem Antriebsrad verbunden ist. Ist die Kraftaufnahme der Schneckenwelle zu hoch, so rutscht der Antriebsriemen über das Rad, ohne dieses mitzudrehen. Selbstverständlich sind auch konstruktiv aufwendigere Massnahmen denkbar und sollen von der vorliegenden Erfindung umfasst sein.

Für die Übertragung der Antriebsbewegung des Fahrzeuges auf die Drehbewegung der Schneckenwelle sind in der Regel noch weitere Getriebelemente notwendig, die jedoch vorliegend nicht näher beschrieben sein sollen.

Zur Verbindung zwischen Planiervorrichtung und Fahrzeug kann im gezeigten Ausführungsbeispiel eine Kupplungshülse dienen, mittels der die Planiervorrichtung um eine Achse in Fahrtrichtung drehbar ausgestaltet ist. Diese Drehbarkeit wird dadurch gewährleistet, dass die Kupplungshülse ein Langloch besitzt, welches von dem entsprechenden Kupplungsbolzen durchsetzt ist. Wird die Planiervorrichtung dementsprechend auf recht unebenen Gelände benutzt, so kann durch die eben genannte Ausgestaltung dieser Unebenheit sehr günstig Rechnung getragen werden. Hierzu dienen im übrigen auch noch zusätzliche Gleitkufen, welche in der bevorzugten Ausführungsform höhenverstellbar ausgebildet sind. Anstelle der Gleitkufen können auch Räder vorgesehen sein.

Bei dem Antriebsfahrzeug handelt es sich im übrigen bevorzugterweise um beispielsweise einen Einachser mit einem entsprechenden hydrostatischen Antrieb. In einer grösseren Ausgestaltung der vorliegenden Erfindung soll die gesamte Vorrichtung selbstfahrend ausgebildet sein Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Frontansicht einer erfindungsgemässen Planiervorrichtung;
Figur 2 eine perspektivische Ansicht der Planiervorrichtung gemäss Figur 1;
Figur 3 eine Frontansicht der Planiervorrichtung gemäss Figur 1 in einer weiteren Gebrauchslage;
Figur 4 eine perspektivische Unteransicht der Planiervorrichtung gemäss Figur 1;
Figur 5 eine perspektivische Ansicht eines Arbeitselementes zum Einsatz in der erfindungsgemäßen Planiervorrichtung.

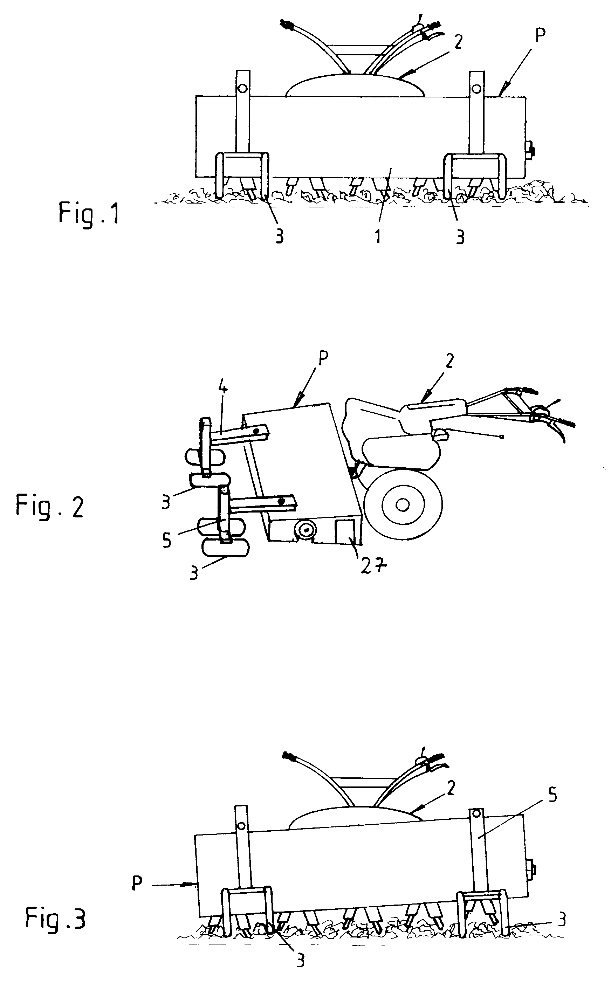

Eine erfindungsgemässe Planiervorrichtung P weist gemäss Figur 1 ein Grundgehäuse 1 auf, welches in Gebrauchslage gemäss den Figuren 1 bis 3 an einem Fahrzeug, beispielsweise einem Einachser 2 festgelegt ist. Mittels dieses Fahrzeuges kann die Planiervorrichtung P geschoben oder gezogen werden. Ferner wird über dieses Fahrzeug 2 ein Antrieb von später beschriebenen Arbeitsgerätschaften innerhalb der Planiervorrichtung P durchgeführt.

Im gezeigten Ausführungsbeispiel befinden sich frontwärtig an der Planiervorrichtung P Gleitkufen 3, welche an entsprechenden Gestängen 4 höhenverstellbar gelagert sind. Hierzu sitzt beispielsweise ein Vierkantrohr, welches mit den Gleitkufen 3 verbunden ist, in einem anderen Rohr 5 und kann in diesem Rohr 5 verschoben und in beliebiger Arbeitsposition festgelegt werden. Hierdurch ist es möglich, dass bei Unebenheiten im Gelände die Planiervorrichtung P gekippt eingesetzt werden kann. Dies ist insbesondere in Figur 3 gezeigt.

Statt der Gleitkufen können auch Räder vorgesehen sein, welche den selben Zweck erfüllen. Auch statt dem geführten Vierkantrohr sind andere Mittel zur Höhenverstellung möglich.

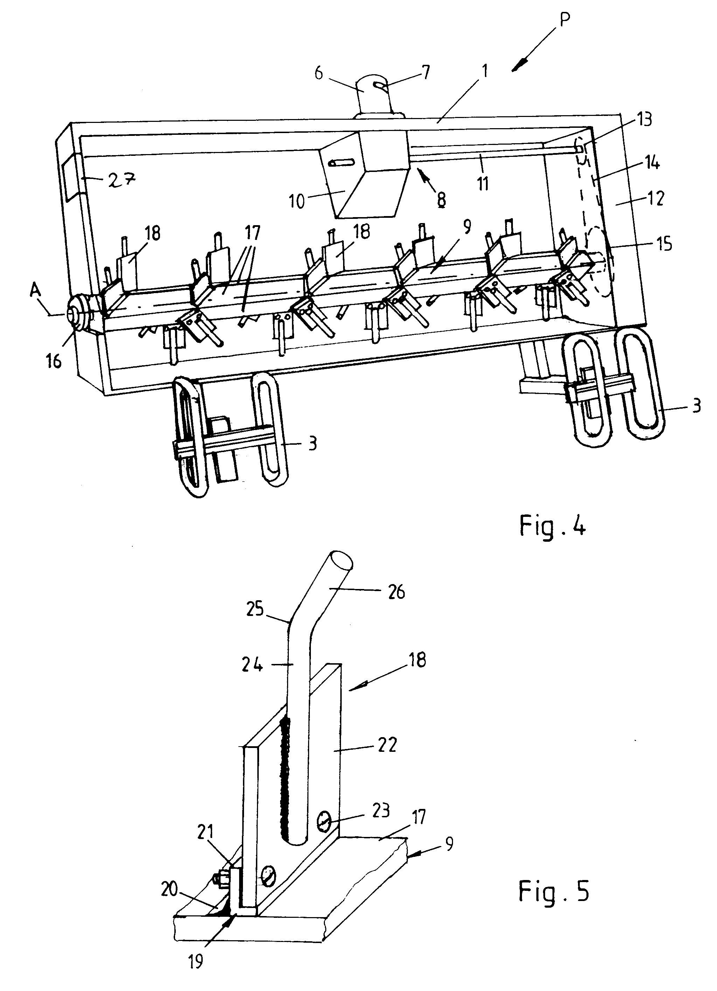

Damit das eben genannte Kippen auch gegenüber dem Fahrzeug 2 bzw. einer nicht näher gezeigten Antriebswelle möglich ist, ist in einer in Figur 4 gezeigten Kupplungshülse 6 ein Langloch 7 eingeformt, in welchem ein entsprechender Kupplungsbolzen gleiten kann. Auf diese Weise wird einem Drehen der Planiervorrichtung P gegenüber dem Fahrzeug Rechnung getragen.

Beim Einstecken der nicht näher gezeigten Kupplungswelle des Fahrzeuges 2 in die Kupplungshülse 6 wird eine Verbindung mit einem Antrieb 8 für eine Scheckenwelle 9 innerhalb der Planiervorrichtung P bzw. des Grundgehäuses 1 hergestellt. Über ein Getriebe 10 erfolgt die Uebertragung der Drehbewegung der Antriebswelle des Fahrzeuges 2 auf eine Drehstange 11, wobei in einem seitlichen Gehäusekasten 12 auf die Drehstange 11 ein Antriebsrad aufgesetzt ist, welches über einen nur gestrichelt angedeuteten Antriebsriemen 14 mit einem der Schneckenwelle 9 aufgesetzten Rad 15 verbunden. Dieser Antriebsriemen 14 gestattet dem Rad 15 einen gewissen Schlupf, beispielsweise bei zu hoher Belastung der Schneckenwelle 9. Selbstverständlich können Antriebsrad 13 und Rad 15 auch als Zahnrad und der Antriebsriemen 14 als Antriebskette ausgebildet sein, wobei sich dann im Getriebe 10 eine entsprechende Rutschkupplung befindet.

Die Schneckenwelle 9 ist beidseits in dem Grundgehäuse 1 gelagert, wobei nur eine entsprechende Lagerstelle 16 angedeutet ist. Die Schneckenwelle 9 dreht über den Antrieb 8 um ihre Längsachse A. Vorzugsweise ist sie querschnittlich mehreckig ausgebildet, so dass Aufsatzflächen 17 für in Figur 5 gezeigte Arbeitselemente 18 ausgebildet sind. Hierzu ist mit der Schneckenwelle 9 ein Montageelement 19 beispielsweise über eine entsprechende Schweissnaht 20 verbunden. An einen Schenkel 21 des Montageelements 19 schlägt eine Platte 22 an, wobei die Platte 22 über Schrauben 23 mit dem Montageelement 19 verbunden ist.

Wie insbesondere in Figur 4 dargestellt, befinden sich die Arbeitselemente 18 auf einer gedachten Schraubenlinie um die Schneckenwelle 9 herum. Dementsprechend sind die Montageelement 19 bzw. Platten 22 im Verhältnis zur Längsachse A schräggestellt.

Zusätzlich befindet sich auf jeweils einer Platte bzw. an dieser Platte 22 angeschweisst ein Aufreisszahn 24, der in einem bevorzugten Ausführungsbeispiel noch einen über ein Knie 25 abgekröpfter Arm 26 besitzt. Mit diesem Arm 26 greift das Arbeitselement 18 tief in den zu bearbeitenden Boden ein und reisst ihn auf, während die Platte 22 als Schaufel bereits gelockertes Bodenmaterial bewegt.

Steine und Bodenmaterial werden durch die Schneckenwelle 9 und mit den Arbeitselementen 18 zur Seite hin verfrachtet, wo sich bevorzugt in dem Gehäuse eine Klappe 27 befindet, durch welche die Steine und das Bodenmaterial seitlich aus dem Gehäuse herausfliegt. Dort bleibt es als Wall liegen und kann abgetragen werden.

## Patentansprüche

1. Vorrichtung zum Planieren von Böden, insbesondere zur Rasen-, Kies- oder Grundplanie, mit einem Grundgehäuse, welches einem Antrieb eines Antriebsfahrzeuges zugeordnet ist,
dadurch gekennzeichnet,
dass in dem Grundgehäuse (1) eine Schneckenwelle (9) angeordnet ist, welche um ihre Längsachse (17) quer zur Fahrtrichtung dreht und auf der Arbeitselemente (18) in einer Schraubenlinie angeordnet sind.

2. Vorrichtung nach Anspruch 1, dadurch gekennzeichnet, dass seitlich neben einem Lager (16) für die Schneckenwelle (9) eine Klappe (27) angeordnet ist.

3. Vorrichtung nach Anspruch 1 oder 2, dadurch gekennzeichnet, dass die Schneckenwelle einen durchgehenden Wendelgang aufweist, auf dem die Arbeitselemente beabstandet angeordnet sind.

4. Vorrichtung nach Anspruch 1 oder 2, dadurch gekennzeichnet, dass die Schneckenwelle (9) querschnittlich mehreckig ausgebildet ist, wodurch Aufsatzflächen (17) für die Arbeitselemente (18) ausgebildet sind.

5. Vorrichtung nach Anspruch 4, dadurch gekennzeichnet, dass auf den Aufsatzflächen (17) Montageelemente (19) schräg zur Längsachse (A) festgelegt sind.

6. Vorrichtung nach Anspruch 5, dadurch gekennzeichnet, dass mit jedem Montageelement (19) eine Platte (22) als Schaufel bevorzugt lösbar verbunden ist.

7. Vorrichtung nach Anspruch 6, dadurch gekennzeichnet, dass an der Platte (22) ein Aufreisszahn (24) festliegt.

8. Vorrichtung nach wenigstens einem der Ansprüche 1-7, dadurch gekennzeichnet, dass die Vorrichtung selbstfahrend ausgebildet ist.

9. Vorrichtung nach wenigstens einem der Ansprüche 1 bis 7, dadurch gekennzeichnet, dass die Schneckenwelle (9) über einen Antrieb (8) mit einem separaten Antriebsfahrzeug (2) verbunden ist.

10. Vorrichtung nach Anspruch 9, dadurch gekennzeichnet, daß der Schneckenwelle (9) ein Rad (15) in einem Gehäusekasten (12) aufgesetzt ist, welches über einen Antriebsriemen (14) mit einem Antriebsrad (13) an einer Drehstange (11) in Verbindung steht.

11. Vorrichtung nach Anspruch 10, dadurch gekennzeichnet, dass die Drehstange (11) mit einem Getriebe (10) und dieses mit einer Antriebswelle des Fahrzeuges (2) in Verbindung steht.

12. Vorrichtung nach wenigstens einem der Ansprüche 1 bis 11, dadurch gekennzeichnet, dass die Kupplung zwischen Grundgehäuse (1) und Fahrzeug (2) über eine Kupplungshülse (6) erfolgt, welche ein Langloch (7) aufweist, das von einem Kupplungsbolzen durchsetzt ist.

13. Vorrichtung nach wenigstens einem der Ansprüche 1-12, dadurch gekennzeichnet, daß am Grundgehäuse (1) höhenverstellbare Gleitkufen (3) festliegen.

14. Vorrichtung nach wenigstens einem der Ansprüche 1-12, dadurch gekennzeichnet, dass am Grundgehäuse (1) höhenverstellbare Räder festliegen.
